# EUROPÄISCHE PATENTANMELDUNG

(11) **EP 2 589 925 A1**
(43) Veröffentlichungstag der Anmeldung: **08.05.2013**
(21) Anmeldenummer: 11187504.3
(22) Anmeldetag: 02.11.2011
(51) Int. Cl.: G01B 11/245, G01B 11/25

(54) **3D-Oberflächeninspektionssystem mittels 2D-Aufnahmen und Verfahren**

(71) Anmelder: Siemens Aktiengesellschaft, 80333 München (DE)
(72) Erfinder: Jahnke, Ronny, 14612 Falkensee (DE); Sczepurek, Tristan, 13129 Berlin (DE)

(57) **Zusammenfassung**

Durch die einfache Aufnahme von zweidimensionalen Bildern und Vergleich eines bekannten 3D-Modells kann durch Bestfit die dreidimensionale reale Struktur einer Komponente erfasst werden.

## Beschreibung

Die Erfindung betrifft ein dreidimensionales Oberflächeninspektionssystem mittels zweidimensionalen Aufnahmen.

Bei vielen Bauteilen ist eine 100%ige optische Prüfung der gesamten dreidimensionalen Bauteiloberfläche erforderlich. Dies umfasst z.B. bei Turbinenschaufeln die Lage der Kühlluftbohrungen und die vollständige Beschichtung.

Bekannte dreidimensionale Erfassungssysteme sind sehr zeitaufwändig und kostenintensiv.

Es ist daher Aufgabe der vorliegenden Erfindung, dieses Problem zu lösen.

Die Aufgabe wird gelöst durch ein 3D-Oberflächeninspektionssystem und ein Verfahren gemäß Anspruch 9.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2: Ausführungsbeispiele der Erfindung.
- Figur 3: eine Turbinenschaufel,
- Figur 4: eine Brennkammer,
- Figur 5: eine Gasturbine.

Die Beschreibung und die Figuren stellen nur Ausführungsbeispiele der Erfindung dar.

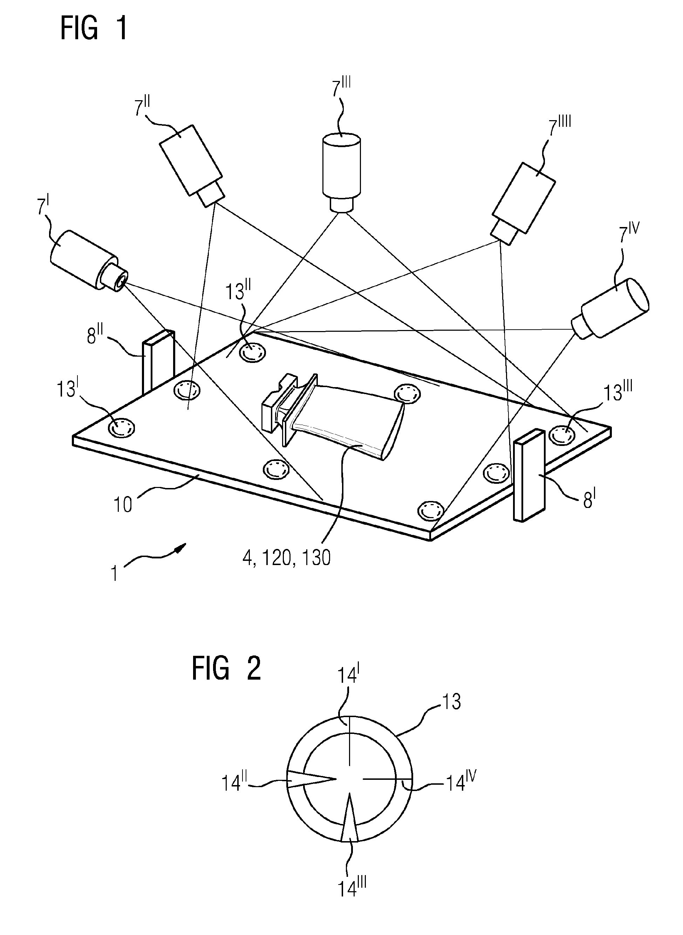

Figur 1 zeigt ein erfindungsgemäßes 3D-Oberflächeninspektionssystem 1.

Das 3D-Oberflächeninspektionssystem 1 weist einen Messtisch 10, auf dem die zu untersuchende Komponente 4, 120, 130 vorhanden ist.

Um die Komponente 4, 120, 130 herum ist zumindest eine Kamera 7' vorhanden, deren Position verändert wird oder es werden mehrere Kameras 7', ..., 7^{V}, die vorzugsweise fest installiert sind, verwendet.

Die Kameras 7', 7" sind so angeordnet, dass sie die gesamte Oberfläche der Komponente 4, 120, 130, die dem Messtisch 10 abgewandt ist, erfassen. Die Installation der Kameras 7', 7'', ... kann je nach Typen von Komponenten variiert werden. Für Turbinenschaufeln 120, 130 verschiedener Größe, Typ (Lauf 120- oder Leitschaufel 130) kann eine gleiche, feste Installation von Kameras 7', 7'', ... verwendet werden.

Auf dem Messtisch 10 gemäß Figur 1 sind vorzugsweise Referenzmarken 13', 13'', ... (wie in Figur 2 dargestellt) vorhanden.

Die 3D-Oberflächeninspektion läuft vorzugsweise wie folgt ab:
1. Bereitstellung von Anordnung aus Messtisch 10, Kamerasystem (ein oder mehrere Kameras 7', 7'', ...) und Beleuchtungseinrichtung 8', 8"
2. Referenzmarken 13 am Messtisch 10 anbringen oder Messtisch 10 weist diese schon auf
3. Positionierung der Komponente 4, 120, 130 auf dem Messtisch 10; am besten flach, wenn Komponente länglich ausgebildet ist
4. Aufnahme von Einzelbildern durch alle verwendeten, fest installierten Kameras 7', 7'', ... oder einer Kamera 7' in verschiedenen Positionen
5. Lageerkennung der Komponente 4, 120, 130 aus den Einzelbildern
6. Fein-Ausrichtung der Komponente zum bekannten 3D Modell durch Bestfit-Analyse
7. Mapping der Einzelbilder auf das zugehörige 3D Modell
8. Optimierung der überlappenden Bildbereiche durch Mittelung, Kontrasteinstellung oder Kantenschärfe
9. Komponenten 4, 120, 130 wenden und Wiederholung ab Schritt 3
10. Kombination von Einzelaufnahmen (2D) mit bekannten hinterlegtem 3D Modell zur "3D-Kontur der Komponente.

Optional erfolgt die Oberflächenerfassung der Komponenten 4, 120, 130 mittels projizierter Lichtstruktur, insbesondere durch Streifen, so dass Kanten der Komponente 4, 120, 130 besser erfasst werden.

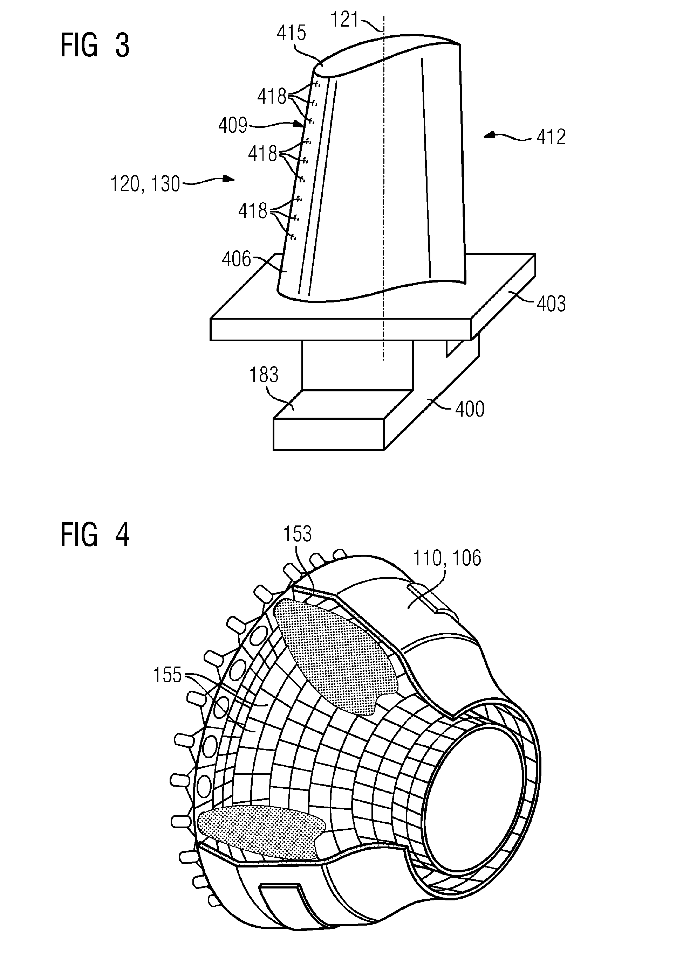

Optional erfolgt eine selektive Ausleuchtung der Komponente 4, 120, 130, insbesondere mittels Beamer, so dass stark reflektierende Bereiche nicht oder weniger beleuchtet werden. Dies ist bei Turbinenschaufeln 120, 130 z.B. der Schaufelfuß 183, 400 (Fig. 4).

Vorzugsweise erfolgt eine Fremdlichtunterdrückung durch monochromatische Beleuchtung und Bildauswertung

Vorzugsweise ist ein Ringlicht am Kameraobjektiv und/oder es wird eine seitliche Dunkelfeldbeleuchtung verwendet, um kleine Fehler wie Kratzer, Unebenheiten, Druckstellen hervorzuheben.

Vorteile sind:
- Keine 3D Vermessung der Komponente 4, 120, 130 erforderlich
- vollständige Erfassung der Oberfläche, da keine Verdeckung durch Einspannvorrichtung
- Freie Positionierung der Kameras möglich (Abgleich durch Referenzmarken)
- Keine zeitaufwändige 3D-Messung erforderlich
- Keine Verdeckung durch Referenzmarken auf dem Prüfling. Genaue Lagedarstellung aller Auffälligkeiten der Prüflingsoberfläche in 3D
- Nachträgliche Vermessung am 3D-Modell möglich
- Geringe Datenmengen « 10 MB) gegenüber üblichen 3D Aufnahmen (> 100 MB)
- Schnelle Darstellung der 2D Einzelbilder auf 3D Model.

Die Referenzmarke 13 ist vorzugsweise ringförmig ausgebildet und weist vier vorzugsweise gleichmäßig verteilte Einkerbungen 14' - 14^{IV} am Ring auf.

Optional kann eine mittels der Kamera 7', 7''' erkennbare Kennzeichnung (Binärcodierung) der Referenzmarken erfolgen. Optional können auch die Referenzmarken mittels Beamer auf einen beliebigen Tisch projiziert und anschließend vermessen werden (Bandmaß). Diese Option ist vorzugsweise bei einem mobilen System ohne codierten Prüftisch zu verwenden.

Die Referenzmarken 13 dienen dazu, die Lage der Komponente 4, 120, 130 zu ermitteln, wenn deren Lage verändert wurde, insbesondere gedreht wurde (Schritt 9). Somit können die Aufnahme der Komponente 4, 120, 130 von beiden Seiten miteinander verknüpft werden. Es werden keine Referenzmarken auf der Komponente 4, 120, 130 benötigt.

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

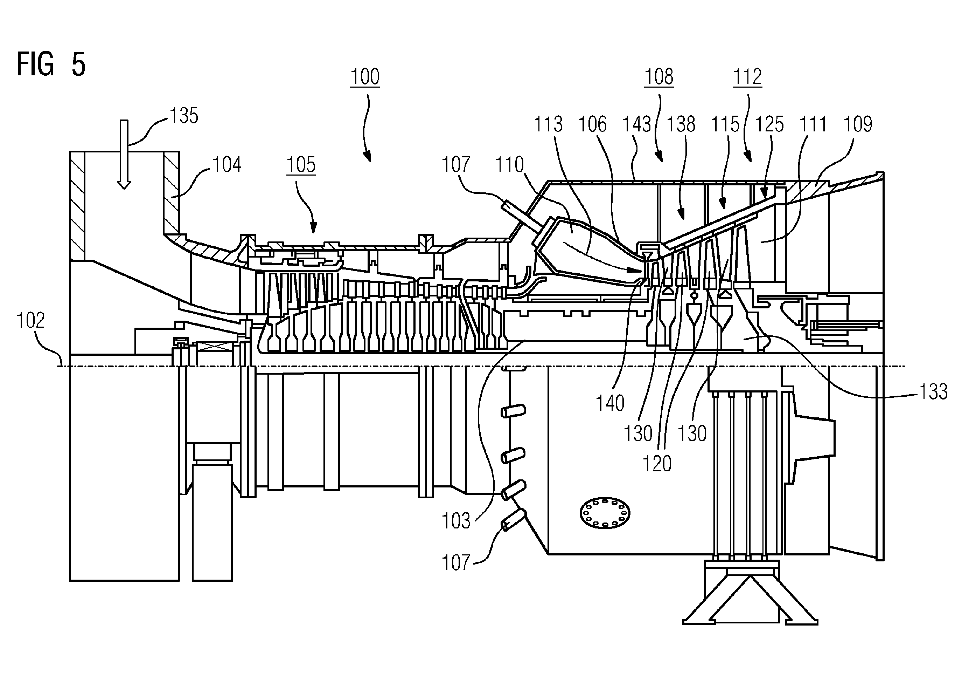

Die Figur 5 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. 3D-Oberflächeninspektionssystem,
das zumindest aufweist:
einen Messtisch (10),
auf den (10) eine Komponente (4, 120, 130) zur 3D-Erfassung aufgelegt werden kann,
zumindest eine Kamera (7', 7'', ...),
insbesondere mehrere Kameras (7', 7'', ...)
die zweidimensionale Aufnahmen von der Komponente (4, 120, 130) tätigt oder tätigen,
einen Computer,
mit dem die zweidimensionalen Aufnahmen der Kameras (7', 7'', ...) mit einem hinterlegten 3D-Modell verglichen werden können und
mittels Bestfit von zweidimensionalen Aufnahmen und
hinterlegtem 3D-Modell ein 3D-Modell der zu messenden Komponenten (4, 120, 130) ergibt.

2. System nach Anspruch 1,
das zur Oberflächeninspektion eine Beleuchtung (8', 8'') aufweist,
die eine projizierte Lichtstruktur ermöglicht, insbesondere eine Streifenstruktur.

3. System nach einem oder beiden der Ansprüche 1 oder 2, das eine Beleuchtung (8', 8'') aufweist,
die eine selektive Ausleuchtung der Komponente (4, 120, 130) ermöglicht.

4. System nach einem oder mehreren der Ansprüche 1, 2 oder 3,
das eine Fremdlichtunterdrückung aufweist,
insbesondere durch monochromatische Beleuchtung und Bildauswertung.

5. System nach Anspruch 1,
bei dem der Messtisch (10) zumindest eine Referenzmarke (13', 13'', ...) aufweist,
insbesondere mehrere Referenzmarken (13', 13'', ...) .

6. System nach einem oder mehreren der Ansprüche 1 bis 5, bei dem das Kameraobjektiv der Kamera (7', 7'', ...) ein Ringlicht aufweist.

7. System nach einem oder mehreren der Ansprüche 1 bis 6, das eine Beleuchtung (8, 8') aufweist,
die eine seitliche Dunkelfeldbeleuchtung ermöglicht.

8. System nach einem oder mehreren der vorherigen Ansprüche,
bei dem die Kameras (7', 7'', ...) fest installiert sind, insbesondere alle Kameras (7', 7", ...).

9. Verfahren zur dreidimensionalen Erfassung einer Komponente (4, 120, 130),
bei dem insbesondere ein System nach einem oder mehreren der Ansprüche 1 bis 8 verwendet wird,
bei dem eine Komponente (4, 120, 130) (10) in verschiedenen Positionen,
insbesondere in zwei Positionen,
auf einem Messtisch von Kameras (7', 7'', ...) zweidimensional erfasst wird und
durch ein Bestfit mit einem bekannten 3D-Modell der Komponente (4, 120, 130) die reale Dreidimensionalität der Komponente (4, 120, 130) bestimmt wird.

10. Verfahren nach Anspruch 9,
bei dem die Lage der Komponente (4, 120, 130) einmal verändert wird,
insbesondere gewendet wird,
ganz insbesondere nur einmal.

11. Verfahren nach einem oder beiden der Ansprüche 9 oder 10,
bei dem Referenzmarken (13', 13'', ...) verwendet werden, um die Lage der Komponente (4, 120, 130) auf dem Messtisch (10) zu ermitteln,
nachdem deren (4, 120, 130) Lage auf dem Messtisch (10) verändert wurde,
insbesondere gewendet wurde.

12. Verfahren nach einem oder mehreren der Ansprüche 9 bis 11,
bei dem
- eine Anordnung aus Messtisch (10), Kamerasystem (ein oder mehrere Kameras 7', 7'', ...) und Beleuchtungseinrichtung 8', 8" bereitgestellt wird
- Referenzmarken 13 am Messtisch 10 angebracht werden oder Messtisch 10 weist diese schon auf
- eine der Komponente (4, 120, 130) auf dem Messtisch (10), am besten flach, wenn Komponente länglich ausgebildet ist, positioniert wird
- Einzelbildern durch alle verwendeten, fest installierten Kameras (7', 7'' ... ) oder einer Kamera (7') in verschiedenen Positionen aufgenommen werden
- eine Lageerkennung der Komponente (4, 120, 130) aus den Einzelbildern erfolgt
- Fein-Ausrichtung der Komponente zum bekannten 3D Modell durch Bestfit-Analyse erfolgt
- ein Mapping der Einzelbilder auf das zugehörige 3D Modell erfolgt
- eine Optimierung der überlappenden Bildbereiche durch Mittelung, Kontrasteinstellung oder Kantenschärfe erfolgt
- die Komponenten wird gewendet und Wiederholung ab Schritt 3
- eine Kombination von Einzelaufnahmen (2D) mit bekannten hinterlegtem 3D Modell zur 3D-Kontur der Komponente (4, 120. 130) erfolgt.
